**Europäisches Patentamt**

**European Patent Office**

**Office européen des brevets**

(19)

(11) Veröffentlichungsnummer: **0 175 793**
**A2**

(12) # EUROPÄISCHE PATENTANMELDUNG

(21) Anmeldenummer: **84103310.3**

(22) Anmeldetag: **26.03.84**

(51) Int. Cl.⁴: **A 47 J 41/02**

(30) Priorität: **20.10.83 DE 8330274 U**

(43) Veröffentlichungstag der Anmeldung:
**02.04.86 Patentblatt 86/14**

(84) Benannte Vertragsstaaten:
**AT BE CH DE FR GB IT LI LU NL SE**

(71) Anmelder: **Rotpunkt Dr. Anso Zimmermann
Industriestrasse
D-6434 Niederaula / Bad Hersfeld(DE)**

(72) Erfinder: **Zimmermann, Anso, Dr.
Seilerweg 34
D-6434 Niederaula(DE)**

(74) Vertreter: **Gunschmann, Klaus, Dipl.-Ing. et al,
Patenanwälte Dipl.-Ing. H. Mitscherlich Dipl.-Ing. H.
Gunschmann Dipl.-Ing. Dr.rer.nat. W. Körber Dipl.-Ing. J.
Schmidt-Evers Dipl.-Ing. W. Melzer Steinsdorfstrasse 10
D-8000 München 22(DE)**

(54) **Isolierkanne.**

(57) Es wird eine Isolierkanne beschrieben, bei der in der Nähe der oberen Ausgießöffnung auf der Außenseite des Schutzgehäuses oder am Griff oder auf der Außenseite des Deckels ein durch einen Vorsprung mit Hinterschneidung oder einen Schlitz gebildeter Aufhänger angeordnet ist. An diesem Aufhänger können beispielsweise die Haltebänder von Teebeuteln befestigt werden.

FIG.1

EP 0 175 793 A2

## Isolierkanne

Gegenstand der Erfindung ist eine Isolierkanne nach dem Oberbegriff des Anspruches 1.

Solche allgemein bekannte Isolierkannen dienen der Warm- bzw. Bereithaltung von Getränken, beispielsweise Tee. Sie bestehen aus einem inneren Aufnahmegehäuse für den Tee und einem das Aufnahmegehäuse ummantelnden Schutzgehäuse hauptsächlich aus Kunststoff oder Metall, wobei zwischen den Gehäusen eine Isolierung besteht, die eine verhältnismässig lange Warmhaltung des bereitgehaltenen Tee gewährleistet.

Eine übliche, zweckentsprechende Benutzung einer betreffenden Isolierkanne besteht darin, daß der bereitzustellende Tee in einem anderen Gefäß zubereitet und in noch heißem Zustand in die Isolierkanne eingefüllt wird, nach deren Verschluß durch einen Deckel der Tee mehrere Stunden warm bleibt. Dabei werden für die Zubereitung des Tees sehr häufig Teebeutel benutzt.

Die Benutzung der Isolierkanne selbst als Aufgußgefäß ist deshalb problematisch, weil es bei der Benutzung von üblichen Teebeuteln mit Bändern an einer geeigneten Halterung für die Teebeutelbänder fehlt, mit denen die Teebeutel nach dem Aufgießen herausgezogen werden können.

Der Erfindung liegt die Aufgabe zugrunde, eine Isolierkanne der vorliegenden Gattung so auszugestalten, daß sie unproblematisch zum Aufgießen von Tee oder dergl. unter Verwendung von Bänder aufweisenden Beuteln verwendet werden kann.

Diese Aufgabe wird durch eine Ausgestaltung nach dem Anspruch 1 gelöst. Eine solche Ausgestaltung ermöglicht es, das freie Ende oder die freien Enden der Teebeutelbänder während des Aufgießens festzulegen, um den oder die Beutel nach dem Aufgießen leicht herausziehen zu können. Hierzu dient ein Schlitz mit einer durch den Schlitzauslauf gebildeten Schulter für Teebeutelbänder mit Endstücken an ihren freien Enden. Zur Festlegung von schlaufenförmigen Teebeutelbändern ist ein Vorsprung mit Hinterschneidung vorgesehen, um den die Schlaufe zu legen ist. Es ist natürlich auch möglich, die zuerst genannten Teebeutelbänder mit Endstücken um den Vorsprung zu schlingen. Der Abstand des Aufhängers von der Öffnung ist kleiner als die Bandlänge damit das Eintauchen des Beutels gewährleistet ist. Es ist auch möglich, den Aufhänger am Griff oder Deckel der Isolierkanne anzuordnen.

Die Ausbildung des Anspruches 2 ermöglicht es, den Aufhänger als separates Bauteil einfach und schnell am Schutzgehäuse zu montieren, wobei zu berücksichtigen ist, daß eine einstückige Anformung schwieriger und zu teureren Werkzeugen führen kann.

Die Ausgestaltungen nach den Ansprüchen 3 und 4 führen zu einer festen Halterung des Aufhängers, die aufgrund des Eingriffs in die Ausnehmung gegeben ist. Dabei befindet sich gemäß Fig. 4 die Verrastung innerhalb der Ausnehmung, wo sie nicht stört und verschmutzt.

Die Ansprüche 5 bis 8 beziehen sich auf vorteilhafte Formgebungen für einsteckbare Aufhänger, die leicht zu handhaben und auch bei einstückiger Bauform leicht herzustellen sind.

die Ausbildung
Zur Festlegung eines Teebeutelbandes mit Endstück dient / gemäß Anspruch 9, wobei die Halterung des Teebeutelbandes durch das Übergreifen der Schlitzauslaufränder oder durch Einfassen in eine Hinterschneidung gewährleistet ist.

Die Ausgestaltungen nach den Ansprüchen 10 und 11 ergeben jeweils eine Stufe im Schlitz, die das unbeabsichtigte Austreten des Bandes aus dem Schlitz erschwert. Vor der beabsichtigten Herausnahme des Bandes ist es auf Schlitzmitte zu bringen. Diese Maßnahme wird durch die Ausgestaltung nach Anspruch 11 erleichtert, weil die gerundeten Wandflächen sich als Leitflächen erweisen.

Die aus dem Anspruch 12 entnehmbare Maßnahme erleichtert das Einführen des Bandes.

Um Gewicht und natürlich auch Material zu sparen, ist die Wanddicke des Schutzgehäuses in der Regel gering gehalten. Das Einfassen des Aufhängers in das Schutzgehäuse ist deshalb problematisch. Hier hilft der im Anspruch 13 enthaltene Gedanke weiter. An der bezeichneten Stelle ist mehr Platz, der den vorgenannten Eingriff in einer Ausnehmung ermöglicht. Dieser Vorteil ist auch im Hinblick auf einen Eingriff des Aufhängers in den Deckel oder in den Griff (Anspruch 1) zu erwähnen.

Eine Ausgestaltung nach Anspruch 14 ist aus ergonomischen Gründen vorteilhaft, in diesem Falle für Rechtshänder. An der bezeichneten Stelle läßt sich das Band zum einen durch ein und dieselbe Hand und zum anderen auch durch die linke Hand bequem ein- bzw. ausführen.

Der im Anspruch 15 bezeichnete Werkstoff ist aus hygienischen und herstellungstechnischen Gründen vorteilhaft einzusetzen.

Nachfolgend wird ein Ausführungsbeispiel der Erfindung anhand einer Zeichnung näher beschrieben. Es zeigen

Fig. 1 eine Isolierkanne in der Seitenansicht;

Fig. 2 einen Teilschnitt nach der Linie II-II in Fig. 1; und

Fig. 3 eine Unteransicht der Darstellung nach Fig. 2.

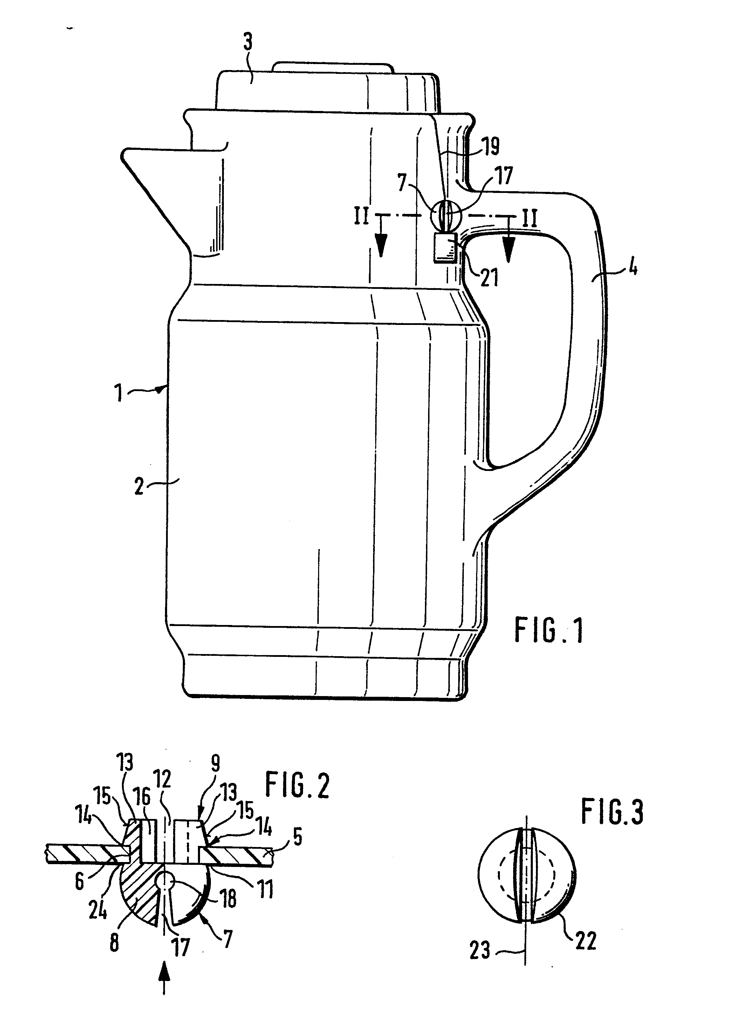

Die in Fig. 1 dargestellte Isolierkanne weist in üblicher Weise ein aus Kunststoff bestehendes Schutzgehäuse 2, einen Deckel 3, der eine nicht ersichtliche Öffnung verschließt, und einen Griff 4 auf. Ein der Flüssigkeitsaufnahme dienendes inneres Aufnahmegehäuse ist ebenfalls nicht ersichtlich.

Im Übergangsbereich zwischen dem Schutzgehäuse 2 und dem Griff 4 befindet sich in der Wand 5 des Schutzgehäuses 2 ein Loch 6, in dem ein Aufhänger 7 verrastet ist.

Der Aufhänger 7 besteht aus einem kugelabschnittförmigen Kopfstück 8 und einem zylinderförmigen Fußstück 9, das einstückig vom Kopfstück 8 ausgeht und auf der Abschnittfläche 11 sitzt. Das Fußstück 9 ist durch eine mittige Nut 12 in zwei Verrastungsnasen 13 geteilt, die auf ihrem Umfang Verrastungskanten 14 tragen, denen Einführungsschrägen 15 vorgeordnet sind. Die Verrastungskanten 14 hinterfassen den inneren Lochrand der Wand 5.

Beim Verrasten des Aufhängers 7 sind die Verrastungsnasen 13 aufgrund des Vorhandenseins zum einen der Nut 12 und zum anderen einer axialen Sackbohrung 16 imstande elastisch einzubiegen, da der Aufhänger 7 aus elastischem Kunststoff besteht.

Im Kopfstück 8 des Aufhängers 7 befinden sich ein vertikaler Schlitz 17 der im Querschnitt nach außen divergiert. Der Grund des Schlitzes 17 wird durch eine bohrungsförmige Schlitzerweiterung 18 gebildet.

In der Fig. 1 ist andeutungsweise ein Teebeutelband 19 erkennbar, das sich durch die Schlitzerweiterung 18 erstreckt und den Aufhänger 7 mit einem Endstück 21 untergreift. Die Oberfläche 22 des Kopfstücks 8 erstreckt sich im Bereich des unteren Schlitzausflaufs etwa rechtwinklig zur Längsachse 23 des Schlitzes 17. Hierdurch ist eine befriedigende Festlegung des Teebeutelbands 19 im Schlitz 17 gewährleistet.

Im Unterschied zum vorbeschriebenen Ausführungsbeispiel ist es auch möglich, einen eingeschlitzten Aufhänger 7 einzusetzen. Es ist nämlich möglich, ein Teebeutelband 19 mit Endstück 21 oder ein schlaufenförmiges Teebeutelband um das Kopfstück 8 zu schlingen, wobei die vorhandene Freischneidung 24 dafür sorgt, daß das Teebeutelband nicht abrutscht. Eine Freischneidung 24 liegt vor, weil die Abschnittsfläche 11 einen Abstand vom Mittelpunkt des kugelförmigen Kopfstücks 8 aufweist.

PATENTANWÄLTE

MITSCHERLICH · GUNSCHMANN · KÖRBER · SCHMIDT-EVERS

0175793

ZUGELASSENE VERTRETER VOR DEM EUROPÄISCHEN PATENTAMT · PROF. REPRESENTATIVES BEFORE THE EUROPEAN PATENT OFFICE
MANDATAIRES AGRÉÉS PRÈS L'OFFICE EUROPÉEN DES BREVETS

Dipl.-Ing. H. Mitscherlich
Dipl.-Ing. K. Gunschmann
Dipl.-Ing. Dr. rer. nat. W. Körber
Dipl.-Ing. J. Schmidt-Evers
Dipl.-Ing. W. Melzer
Steinsdorfstraße 10
D-8000 München 22
Telefon (089) 29 66 84-86
Telex 523 155 mitsh d
Psch-Kto Mchn 195 75-803
LPA-Kto 28 000 206

Rotpunkt
Dr. Anso Zimmermann
Industriestraße

6434 Niederaula

20. Oktober 1983
Dr.Kö/lö

A n s p r ü c h e

1. Isolierkanne zur Aufbewahrung von Flüssigkeiten, die
oberseitig eine durch einen Deckel verschließbare Öffnung aufweist und aus einem inneren Aufnahmegehäuse und einem äußeren
Schutzgehäuse besteht, dem gegebenenfalls ein Griff zugeordnet ist, dadurch gekennzeichnet, daß in der Nähe der
Öffnung auf der Außenseite des Schutzgehäuses (2) oder am
Griff (4) oder auf der Außenseite des Deckels (3) ein durch
einen Vorsprung mit Hinterschneidung (Kopfstück 8) oder einen
Schlitz (17) gebildeter Aufhänger (7) angeordnet ist.

2. Isolierkanne nach Anspruch 1, dadurch gekennzeichnet,
daß der Aufhänger (7) durch eine Verrastung (Verrastungskanten 14)
am Schutzgehäuse (2) befestigt ist.

3. Isolierkanne nach einem der Ansprüche 1 oder 1, dadurch gekennzeichnet, daß das Schutzgehäuse (2) zur Aufnahme des Aufhängers (7) eine Ausnehmung (Loch 6) aufweist.

4. Isolierkanne nach Anspruch 2 oder 3, dadurch gekennzeichnet, daß die Verrastung (14) innerhalb der Ausnehmung (6) ausgebildet ist.

5. Isolierkanne nach einem der Ansprüche 1 bis 4, dadurch gekennzeichnet, daß der Aufhänger (7) aus einem bevorzugt einstückig miteinander verbundenen Kopf- und Fußstück (8,9) besteht, wobei am Kopfstück (8) der Vorsprung (8) oder der Schlitz (17) und am Fußstück (9) die Verrastung (14) ausgebildet ist.

6. Isolierkanne nach einem der Ansprüche 2 bis 5, dadurch gekennzeichnet, daß der Aufhänger (7) eine bevorzugt einstückig von ihm ausgehende, federnde Verrastungsnase (13) aufweist, der eine Einführschräge (15) zugeordnet ist und die eine Verrastungskante (innerer Lochrand) am Schutzgehäuse (2) hinterfaßt.

7. Isolierkanne nach Anspruch 5 oder 6, dadurch gekennzeichnet, daß das Fußstück (9) mittig geschlitzt ist und beide Fußstückteile Verrastungsnasen (13) mit radialen Verrastungskanten (14) bilden.

8. Isolierkanne nach einem der Ansprüche 5 bis 7, dadurch gekennzeichnet, daß das Kopfstück (8) kugelabschnittförmig ausgebildet ist, wobei das Fußstück (9) auf der Abschnittsfläche (11) angeordnet ist.

9. Isolierkanne nach einem der Ansprüche 1 bis 8, dadurch gekennzeichnet, daß die Kanten des Aufhängers (7) am unteren Schlitzauslauf entweder etwa rechtwinklig zur Längsachse (23) des Schlitzes (17) verlaufen oder hinterschnitten sind.

10. Isolierkanne nach Anspruch 9, dadurch gekennzeichnet, daß der Grund des Schlitzes (17) durch eine Schlitzerweiterung (18) gebildet ist.

11. Isolierkanne nach Anspruch 10, dadurch gekennzeichnet, daß der Grund des Schlitzes (17) bohrungsförmig gerundet ist.

12. Isolierkanne nach einem der Ansprüche 9 bis 11, dadurch gekennzeichnet, daß der Schlitz (17) nach außen divergiert.

13. Isolierkanne nach einem der Ansprüche 3 bis 12, dadurch gekennzeichnet, daß die Ausnehmung (6) im gerundeten oder schrägen Übergangsbereich zwischen dem Schutzgehäuse (2) und dem Griff (4) angeordnet ist.

14. Isolierkanne nach einem der Ansprüche 1 bis 12, dadurch gekennzeichnet, daß der Aufhänger (7) - vom Griff (4) aus gesehen - links neben dem Griff (4) angeordnet ist.

15. Isolierkanne nach einem der Ansprüche 1 bis 13, dadurch gekennzeichnet, daß der Aufhänger (7) aus Kunststoff besteht.

FIG.1

FIG.2

FIG.3